# EUROPÄISCHE PATENTANMELDUNG

(11) **EP 0 962 693 A1**
(43) Veröffentlichungstag der Anmeldung: **08.12.1999**
(21) Anmeldenummer: 99109353.5
(22) Anmeldetag: 01.06.1999
(51) Int. Cl.: F21V 8/00

(54) **Anzeigevorrichtung mit wechselnder Darstellung**

(30) Priorität: 03.06.1998 DE 29809938 U
(71) Anmelder: Müller, Frank R., Dipl.-Ing., 01326 Dresden (DE)
(72) Erfinder: Müller, Frank R., Dipl.-Ing., 01326 Dresden (DE)
(74) Vertreter: Schurack, Eduard F.

(57) **Zusammenfassung**

Die vorliegende Erfindung betrifft eine Anzeigevorrichtung mit mindestens einer Lichtquelle (14), einer lichtdurchlässigen Platte (22a; 40), die Vertiefungen (22c; 52) aufweist, wobei die Lichtquelle (14) derart angeordnet ist, daß von der Lichtquelle ausgestrahltes Licht an einer der Kanten der Platte einstrahlbar ist, die in einer Ebene senkrecht zu den Vertiefungen verlaufen, um das Licht an zumindest einem Teil der Vertiefungen zu brechen und dadurch in Richtung zu einem Betrachter zur Erzeugung einer ersten Darstellung abzulenken, Mitteln zur Erzeugung einer zweiten Darstellung, und Mitteln zur Unterbrechung (18; 48; 54; 60) der Erzeugung der ersten und/oder zweiten Darstellung.

## Beschreibung

Die vorliegende Erfindung betrifft eine Anzeigevorrichtung mit wechselnder Darstellung. Derartige Vorrichtungen werden beispielsweise im Bereich der Leuchtreklame eingesetzt, wie sie jedermann aus Schaufenstern, an oder auf Häusern, neben Autobahnen sowie auch als auf Tischen abstellbar bekannt sind.

Aufgabe der vorliegenden Erfindung ist es eine weitere Art dieser Anzeigevorrichtungen vorzuschlagen. Insbesondere soll diese neue Art von Anzeigevorrichtungen interessante optische Effekte ermöglichen und kostengünstig herstellbar sein.

Zur Lösung dieser Aufgabe wird eine Anzeigevorrichtung vorgeschlagen umfassend mindestens eine Lichtquelle, eine lichtdurchlässige Platte, die Vertiefungen aufweist, wobei die Lichtquelle derart angeordnet ist, daß von der Lichtquelle ausgestrahltes Licht an einer der Kanten der Platte einstrahlbar ist, die in einer Ebene senkrecht zu den Vertiefungen verlaufen, um das Licht an zumindest einem Teil der Vertiefungen zu brechen und dadurch in Richtung zu einem Betrachter zur Erzeugung einer ersten Darstellung abzulenken, Mittel zur Erzeugung einer zweiten Darstellung und Mittel zur Unterbrechung der Erzeugung der ersten und/oder zweiten Darstellung.

Werden die Vertiefungen so in die Platte eingearbeitet, daß sich hierdurch ein Bild ergibt, so kann ein Betrachter, der senkrecht zur Einstrahlebene auf die Platte blickt, lediglich ein den Vertiefungen entsprechendes Bild wahrnehmen. Der Rest der Platte, der keine Vertiefungen aufweist, zeigt keine Reflexionen und bleibt daher unbeleuchtet. Werden nun mehrere derartige Platten hintereinander angeordnet, wobei die Vertiefungen nicht deckungsgleich gewählt werden, so kann durch Einstrahlen von Licht in alle Platten gleichzeitig oder in unterschiedliche Platten in zeitlicher Abfolge ein interessanter optischer Effekt erzielt werden. Beispielsweise läßt sich hierdurch ein Bewegungsablauf darstellen.

Es kann vorgesehen werden, die der Lichtquelle zugewandte Kante der Platten bzw. der Platte mit einer lichtdurchlässigen farbigen Schicht zu versehen, wodurch die Brechungen an den Vertiefungen in der gewünschten Farbe erstrahlen.

Gemäß einer weiteren Ausführungsform ist zwischen mindestens einer Platte mit Vertiefungen und einer Platte ohne Vertiefungen ein durchleuchtbares Bild, beispielsweise ein Lichtbild oder Dia, vorgesehen. Wenn nun Licht in die Platte ohne Vertiefungen eingestrahlt wird, wobei diese in vorteilhafter Weise an ihren Rändern und der Ebene, die vom Betrachter abgekehrt ist, verspiegelt ist, so tritt Licht durch das Dia hindurch und erzeugt eine zweite Darstellung. Durch die Vorsehung von Mitteln, um zwischen der durch die lichtdurchlässige Platte mit Vertiefungen erzeugten Darstellung und der mittels des Dias erzeugten Darstellung hin- und herzuschalten, läßt sich ebenfalls ein interessanter optischer Effekt erzielen.

Selbstverständlich kann diese Ausführungsform um weitere Platten mit Vertiefungen ergänzt werden, wobei dann auch die mit diesen Platten erzeugten Darstellungen in die Bildkomposition involviert werden können. Als Beispiel für den Einsatz einer derartigen Anzeigevorrichtung kann das auf dem Dia dargestellte Bild eine winklig angeordnete Flasche zeigen, während mit Hilfe der Vertiefungen die Kontur eines mit den Umrissen der Flasche übereinstimmenden bzw. sich größtenteils deckenden Flugzeugs dargestellt werden kann.

Gemäß einer weiteren Ausführungsform kann unter einer einzelnen lichtdurchlässigen Platte mit Vertiefungen ein Prisma angeordnet werden, das beispielsweise ein in Längsrichtung verdrillter, kantiger Stab sein kann oder ein kantiger Stab, der beispielsweise bei einer bestimmten Länge versetzt weiterläuft. Durch Drehen des Prismas wird erreicht, daß Licht nur in einen Teilbereich der lichtdurchlässigen Platte eingestrahlt wird und somit auch nur an den Vertiefungen dieses Teilbereichs gebrochen und zum Betrachter gelenkt wird.

Weitere vorteilhafte Weiterbildungen der Erfindung sind in den Unteransprüchen definiert.

Ausführungsbeispiele werden im folgenden unter Hinweis auf die beigefügten Zeichnungen näher beschrieben. Es stellen dar:
- Fig. 1: in schematischer Darstellung eine Frontansicht einer erfindungsgemäßen Anzeigevorrichtung gemäß einer ersten Ausführungsform;
- Fig. 2: schematisch eine Seitenansicht der in Fig. 1 dargestellten Ausführungsform;
- Fig. 3: in Seitenansicht eine erfindungsgemäße Anzeigevorrichtung gemäß einer zweiten Ausführungsform;
- Fig. 4: in Seitenansicht eine erfindungsgemäße Anzeigevorrichtung gemäß einer dritten Ausführungsform;
- Fig. 5: in Seitenansicht eine erfindungsgemäße Anzeigevorrichtung gemäß einer vierten Ausführungsform;
- Fig. 6: in Seitenansicht eine erfindungsgemäße Anzeigevorrichtung gemäß einer fünften Ausführungsform;
- Fig. 7: in Draufsicht ein Prisma wie es beispielsweise in der Ausführungsform gemäß Fig. 6 verwendet werden kann.

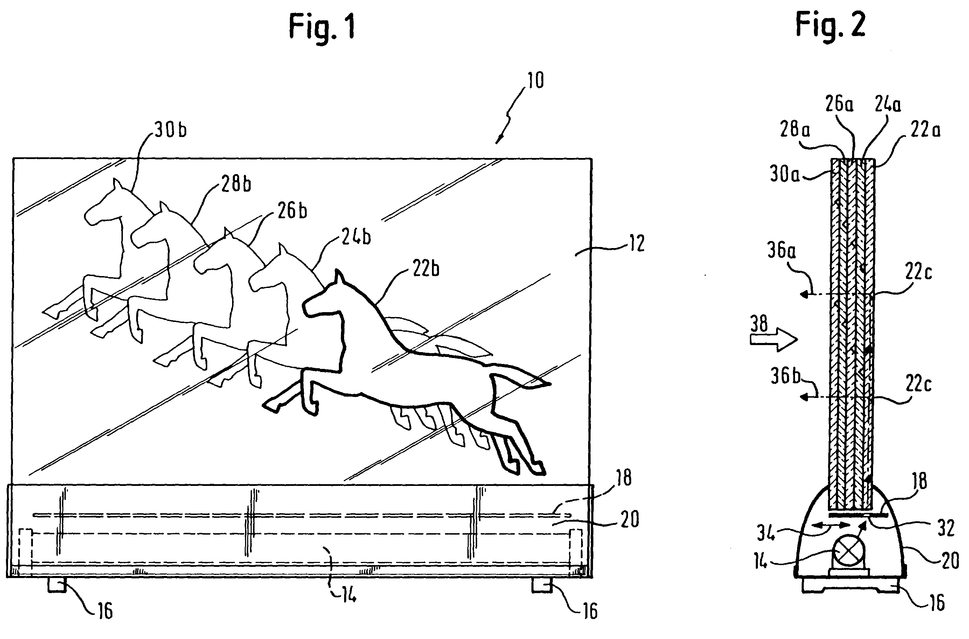

Fig. 1 und Fig. 2 zeigen eine Anzeigevorrichtung 10 mit einer Anzeigefläche 12, einer Lichtquelle 14, Standfüßen 16 sowie einer Blende 18 oder Schlitzmaske, wobei die Lichtquelle 14, beispielsweise eine Gasentladungslampe, und die Blende 18 in einem lichtdichten Gehäuse 20 angeordnet sind. Die Blende 18 kann mittels nicht dargestellter Bewegungsmittel in Richtung des Pfeils 34 hin- und herbewegt werden. Über der Blende 18 sind fünf lichtdurchlässige Platten 22a, 24a, 26a, 28a, 30a, beispielsweise aus Acrylglas oder jedem anderem geeigneten lichtdurchlässigen Material, in paralleler Weise angeordnet. Jede dieser Platten weist Vertiefungen auf, die jeweils die Kontur eines Pferdes nachbilden. Die Vertiefungen der einzelnen Platten ergeben somit eine Folge von versetzten Pferdekonturen 22b, 24b, 26b, 28b, 30b. Die Vertiefungen können beispielsweise durch Gravur oder Fräsen oder Ätzen oder dergleichen in die lichtdurchlässigen Platten eingearbeitet werden. Die Öffnung 32 der Blende 18 hat im wesentlichen die Länge der lichtdurchlässigen Platten 22a, 24a, 26a, 28a, 30a und die Breite einer einzelnen Platte. Wird nunmehr Licht von der Lichtquelle 14 abgestrahlt, so tritt dieses Licht durch die Öffnung 32 der Blende 18 hindurch, wird in der dargestellten Position der Blende 18 an den Vertiefungen 22c gebrochen und in Richtung der Pfeile 36a, 36b auf einen Betrachter hin abgelenkt. Die Blickrichtung des Betrachters ist mit einem Pfeil 38 angedeutet. In der eingezeichneten Stellung der Blende 18 sieht der Betrachter die Kontur 22b. Wird nunmehr die Blende in Richtung des Pfeils 34 nach links bewegt so erlischt die Kontur 22b und der Betrachter erkennt nacheinander die Konturen 24b, 26b, 28b, 30b.

Es ist offensichtlich, daß für diese Anordnung jede beliebige Zahl von Platten zur Anzeige beliebiger Konturen oder Muster verwendet werden kann. Anstatt einer Lichtquelle 14 können auch mehrere Lichtquellen verwendet werden. Es kann auch vorgesehen werden, den Spalt 32 der Blende 18 quer zu den Platten anzuordnen und in gewünschter Länge auszubilden. Durch Bewegung des Spalts, beispielsweise durch Ausbildung der Blende 18 aus beweglichem Material und Aufrollen an den Hochkanten der Platten lassen sich weitere optische Effekte erzielen.

Die Vertiefungen können wie dargestellt dreiecks- d.h. keilförmig sein, sie können jedoch auch rechteckförmig oder mit gerundetem Abschluß ausgebildet werden. Die Tiefe der Vertiefungen kann auf die Plattenstärke abgestimmt werden. Die Kanten der Platten mit Ausnahme der der Lichtquelle zugeordneten Kante können zur Verbesserung des optischen Effekts verspiegelt werden.

Zwischen Blende 18 und Unterkante der Platten 22a, 24a, 26a, 28a, 30a können Farbschichten z.B. Farbfolien auf die Unterkanten der Platten aufgebracht werden. Es können auf Farbfilter zwischen Blende 18 und Unterkante der Platten 22a, 24a, 26a, 28a, 30a angeordnet werden.

Es kann darüberhinaus vorgesehen werden die Innenseite des Gehäuses 20 zu verspiegeln, um eine maximale Lichtmenge in die gewünschte(n) Platte(n) einzustrahlen.

Es ist offensichtlich, daß der Spalt 32 der Blende 18 hinsichtlich seiner Breite für die Einstrahlungen mehrere Platten abgeändert werden kann.

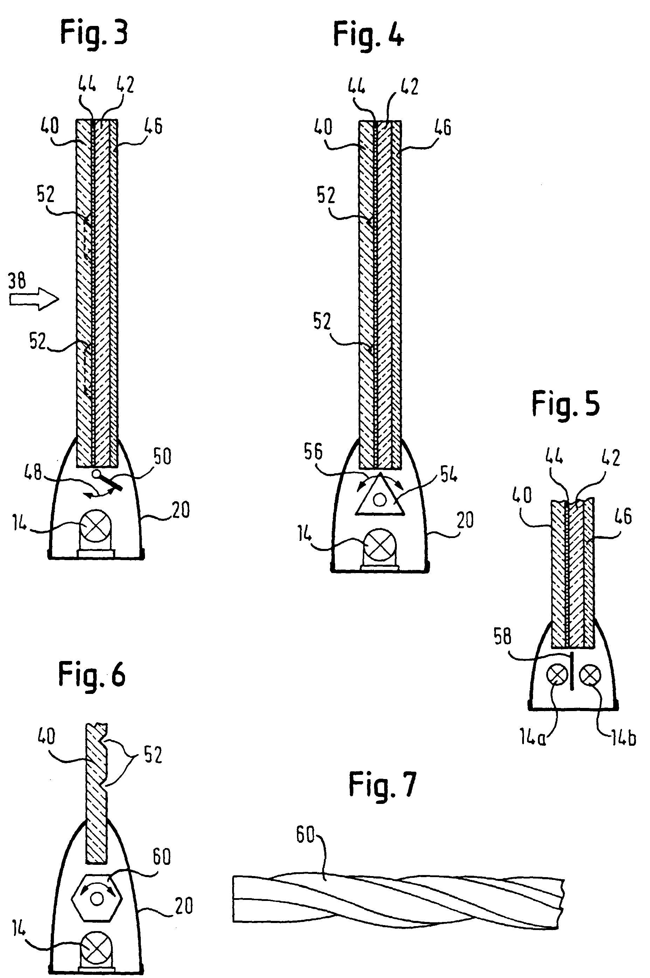

Bei der in Fig. 3 dargestellten Ausführungsform ist zwischen einer Platte 40 mit eingearbeiteten Vertiefungen 52 und einer lichtdurchlässigen Platte 42 ohne Vertiefungen ein durchleuchtbares Bild (44) beispielsweise ein Dia angeordnet. Die Platte 42 wird in vorteilhafterweise als Lichtstreuscheibe ausgebildet und kann auf der vom Dia abgewandten Seite durch eine Reflexscheibe 46, vorzugsweise in weiß, abgeschlossen werden. Zwischen der Lichtquelle 14 und der Unterkante der Platten 40, 42, 46 ist eine in Pfeilrichtung 48 bewegliche Klappe 50 vorgesehen, mittels derer ausgewählt werden kann in welche der Platten 40, 42 Licht eingestrahlt wird. In der gezeigten Darstellung wird Licht von der Lichtquelle 14 in die Platte 40 eingestrahlt, wodurch der Betrachter bei Blick in Blickrichtung 38 die den Vertiefungen 52 entsprechende Darstellung erkennt. Wird nun die Klappe 50 in Pfeilrichtung 48 nach links bewegt, so kann in Senkrechtstellung der Klappe 50 Licht von der Lichtquelle 14 zusätzlich in die Platte 42 eindringen und das Dia 44 durchleuchten. Der Betrachter, der in Blickrichtung 38 blickt, erkennt sowohl die den Vertiefungen 52 entsprechende Darstellung der Platte 40 sowie das Dia 44. Wird die Platte 50 nunmehr weiter in Pfeilrichtung 48 nach links bewegt, so erlischt die den Vertiefungen 52 entsprechende Darstellung und der Betrachter sieht lediglich das Dia 44, da Licht von der Lichtquelle 14 nur noch in die Platte 42 eingestrahlt wird.

Bei der in der Fig. 4 dargestellten Ausführungsform, die hinsichtlich der Plattenanordnung der Fig. 3 entspricht, ist ein Prisma 54 zwischen Lichtquelle 14 und Unterkante der Platten 40, 42, 46 beweglich angeordnet. Das dargestellte Prisma 54 kann in Pfeilrichtung 56 gedreht werden, wodurch je nach Stellung des Prismas 54 Licht in die eine, die andere oder beide Platten 40, 42 eingestrahlt wird. Das dargestellte Prisma 54 hat dreieckförmigen Querschnitt, es kann jedoch mit beliebigem Querschnitt ausgebildet werden. Insbesondere ist es möglich, das Prisma 54 als kantigen Stab auszubilden, wobei entlang der Längserstreckung des Prismas 54 die Kanten versetzt weiterlaufen können. Hierdurch wird erreicht, daß Licht nicht nur in unterschiedliche Platten 40, 42 eingestrahlt werden kann, sondern auch jeweils unterschiedliche Teilbereiche der Platten 40, 42 beleuchtet sind. Beispielsweise kann durch geeignet versetzte Anordnung eines Prismas 54 mit dreieckförmigem Querschnitt erreicht werden, daß sequentiell zunächst der rechte dann der mittlere dann der linke Teil der den Vertiefungen entsprechenden Darstellung der Platte 40 vom Betrachter wahrgenommen werden kann. Auch bei den in den Figuren 3 und 4 dargestellten Ausführungsformen können die Unterkanten der Platten 40, 42 mit Farbfolie versehen werden. Die in den Figuren 3 und 4 dargestellten Varianten können selbstverständlich mit der in den Figuren 1 und 2 dargestellten Ausführungsform verbunden werden, so daß beispielsweise durch die Verwendung der Blende 18 nicht nur Licht in unterschiedliche Platten mit Vertiefungen, sondern auch in die Platte ohne Vertiefungen eingestrahlt werden kann.

Bei der in der Fig. 5 dargestellten Ausführungsform sind zwei Lichtquellen 14a, 14b vorhanden, die durch eine lichtundurchlässige Wand 58 voneinander getrennt sind. Durch abwechselndes Einschalten der Lichtquellen kann erreicht werden, daß in die eine, in die andere, in beide oder keine der Platten 40, 42 Licht eingestrahlt wird. Je nach Anzahl der Platten können selbstverständlich weitere Lichtquellen vorgesehen werden. Insbesondere können mehrere Lichtquellen auch in der Längsrichtung der Platten angeordnet werden, die ebenfalls separat ein- und ausschaltbar ausgebildet und durch lichtundurchlässige Wände voneinander getrennt sein können.

In Fig. 6 ist eine weitere Ausführungsform dargestellt, bei der lediglich eine Platte 40 mit Vertiefungen 52 über einem beweglichen, insbesondere drehbaren Prisma 60, und einer Lichtquelle 14 angeordnet ist. Bei dieser Ausführungsform ist das Prisma 60 wie in Fig. 7 dargestellt, als in Längsrichtung verdrillter Stab ausgebildet. Je nach Anzahl der Verdrillungen des Stabs kann erreicht werden, daß in mehrere Teilbereiche der Platte 40 Licht eingestrahlt wird, während andere Teilbereiche dunkel bleiben. Diese Ausführungsform läßt sich selbstverständlich auch mit einem kantigen Prisma kombinieren, bei dem in Längsrichtung die Kanten versetzt weiterlaufen. In vorteilhafter Weise ist an der Seite die Platte 40, an der die Vertiefungen 52 eingearbeitet sind, eine Reflexscheibe vorgesehen.

Es ist offensichtlich, daß das Prisma 60 eine beliebige Anzahl von Kanten aufweisen kann. Ein derartiges Prisma 60 kann ohne weiteres in der Ausführungsform gemäß Fig. 4 verwendet werden. Es kann vorgesehen werden, daß Prisma 60 entlang seiner Längserstreckung unterschiedlich zu färben beispielsweise durch Bekleben mit entsprechend gefärbten Folien. Alternativ kann jedoch auch die Unterkante der Platte 40 in gewünschter Weise mit einer Farbfolie versehen werden.

## Patentansprüche

1. Anzeigevorrichtung mit
mindestens einer Lichtquelle (14),
einer lichtdurchlässigen Platte (22a; 40), die Vertiefungen (22c; 52) aufweist, wobei die Lichtquelle (14) derart angeordnet ist, daß von der Lichtquelle ausgestrahltes Licht an einer der Kanten der Platte einstrahlbar ist,
die in einer Ebene senkrecht zu den Vertiefungen verlaufen, um das Licht an zumindest einem Teil der Vertiefungen zu brechen und dadurch in Richtung zu einem Betrachter zur Erzeugung einer ersten Darstellung abzulenken,
Mitteln zur Erzeugung einer zweiten Darstellung, und
Mitteln zur Unterbrechung (18; 48; 54; 60) der Erzeugung der ersten und/oder zweiten Darstellung.

2. Anzeigevorrichtung nach Anspruch 1,
**dadurch gekennzeichnet, daß**
sie zur Erzeugung der zweiten Darstellung eine zweite lichtdurchlässige Platte (24a) mit Vertiefungen aufweist,
in die Licht an einer der Kanten der Platte einstrahlbar ist, die in einer Ebene senkrecht zu den Vertiefungen verlaufen, um das Licht an zumindest einem Teil der Vertiefungen zu brechen und dadurch in Richtung zu einem Betrachter zur Erzeugung der zweiten Darstellung abzulenken.

3. Anzeigevorrichtung nach Anspruch 2,
**dadurch gekennzeichnet, daß**
sie weiterhin eine zwischen Lichtquelle (14) und Einstrahlseite der Platten (22a, 24a; 40, 42) angeordnete bewegliche Klappe (50) aufweist, wodurch Licht abwechselnd in die eine Platte oder die andere Platte, oder in die eine Platte und mit zeitlichen Unterbrechungen in die andere Platte einstrahlbar ist.

4. Anzeigevorrichtung nach Anspruch 2 oder 3,
**dadurch gekennzeichnet, daß**
sie mindestens eine weitere lichtdurchlässige Platte (26a) mit Vertiefungen aufweist, wobei alle Platten in paralleler Lage angeordnet sind, und mithilfe der Unterbrechungsmittel (18) Licht in eine einzelne Platte oder mehrere Platten oder alle Platten oder unterschiedliche Bereiche der Platten einstrahlbar ist.

5. Anzeigevorrichtung nach einem der vorhergehenden Ansprüche,
**dadurch gekennzeichnet, daß**
sie zur Erzeugung der zweiten oder einer weiteren Darstellung weiterhin eine lichtdurchlässige Platte (42) ohne Vertiefungen aufweist, wobei zwischen der mindestens einen lichtdurchlässigen Platte (40) mit Vertiefungen und der lichtdurchlässigen Platte ohne Vertiefungen ein durchleuchtbares Bild (44) angeordnet ist.

6. Anzeigevorrichtung nach Anspruch 5,
**dadurch gekennzeichnet, daß**
das durchleuchtbare Bild (44) im wesentlichen die Größe der lichtdurchlässige Platte (42) ohne Vertiefungen hat.

7. Anzeigevorrichtung nach Anspruch 5 oder 6,
**dadurch gekennzeichnet, daß**
sie weiterhin eine zwischen Lichtquelle (14) und Einstrahlseite der Platten angeordnete bewegliche Klappe (50) aufweist, wodurch Licht abwechselnd in eine lichtdurchlässige Platte mit Vertiefungen oder die lichtdurchlässige Platte ohne Vertiefungen, oder in die lichtdurchlässige Platte ohne Vertiefungen und mit zeitlichen Unterbrechungen in eine lichtdurchlässige Platte mit Vertiefungen, oder in eine lichtdurchlässige Platte mit Vertiefungen und mit zeitlichen Unterbrechungen in die lichtdurchlässige Platte ohne Vertiefungen einstrahlbar ist.

8. Anzeigevorrichtung nach einem der vorhergehenden Ansprüche,
**dadurch gekennzeichnet, daß**
die Unterbrechungsmittel eine Blende (18) umfassen, die senkrecht zur Unterkante der Platten bewegbar ist.

9. Anzeigevorrichtung nach Anspruch 8,
**dadurch gekennzeichnet, daß**
die Öffnung (32) der Blende (18) im wesentlichen die Länge einer Platte und im wesentlichen die Breite einer oder mehrerer Platten aufweist.

10. Anzeigevorrichtung nach einem der vorhergehenden Ansprüche,
**dadurch gekennzeichnet, daß**
zwischen der mindestens einen Lichtquelle und der Einstrahlkante der mindestens einen lichtdurchlässigen Platte (40) ein Prisma (60) beweglich, insbesondere drehbar angeordnet ist.

11. Anzeigevorrichtung mit
mindestens einer Lichtquelle (14), einer lichtdurchlässigen Platte (40) mit Vertiefungen (52),
wobei zwischen der Lichtquelle und der lichtdurchlässigen Platte ein Prisma (60) derart beweglich angeordnet ist,
daß durch Bewegung des Prismas abwechselnd Licht in unterschiedliche Teilbereiche der Kanten der Platte einstrahlbar ist, die in einer Ebene senkrecht zu den Vertiefungen verlaufen, um an den jeweiligen Vertiefungen gebrochen und in Richtung auf einen Betrachter abgelenkt zu werden.

12. Anzeigevorrichtung nach einem der vorhergehenden Ansprüche,
**dadurch gekennzeichnet, daß**
sie mehrere Lichtquellen (14a; 14b) aufweist, die unabhängig voneinander ein- und ausschaltbar sind und zur Einstrahlung von Licht in eine Teilmenge der n Platten oder unterschiedliche Bereiche entlang der Längsrichtung der Platten angeordnet sind.

13. Anzeigevorrichtung nach einem der Ansprüche 10 bis 12,
**dadurch gekennzeichnet, daß**
das Prisma ein mehrkantiger lichtdurchlässiger Stab (54, 60) ist, der insbesondere im wesentlichen die Länge einer lichtdurchlässigen Platte aufweist.

14. Anzeigevorrichtung nach Anspruch 13,
**dadurch gekennzeichnet, daß**
der mehrkantige lichtdurchlässige Stab in Längsrichtung verdrillt ist.

15. Anzeigevorrichtung nach einem der vorhergehenden Ansprüche,
**dadurch gekennzeichnet, daß**
zwischen der Lichtquelle und der der Lichtquelle zugewandten Kante mindestens einer lichtdurchlässigen Platte mit Vertiefungen eine farbige lichtdurchlässige Schicht angeordnet ist.

16. Anzeigevorrichtung nach einem der Ansprüche 12 bis 15,
**dadurch gekennzeichnet, daß**
das Prisma entlang seiner Längsrichtung unterschiedliche Farbe aufweist.

17. Anzeigevorrichtung nach einem der vorhergehenden Ansprüche,
**dadurch gekennzeichnet, daß**
die Vertiefungen (22c; 52) durch Gravur erzeugt worden sind.

18. Anzeigevorrichtung nach einem der vorhergehenden Ansprüche,
**dadurch gekennzeichnet, daß**
die Vertiefungen (22c; 52) keilförmig oder rechteckig sind.

19. Anzeigevorrichtung nach einem der vorhergehenden Ansprüche,
**dadurch gekennzeichnet, daß**
die mindestens eine lichtdurchlässige Platte aus Acrylglas besteht.
